# EUROPEAN PATENT APPLICATION

(11) **EP 4 425 643 A1**
(43) Date of publication of application: **04.09.2024**
(21) Application number: 21961699.2
(22) Date of filing: 26.10.2021
(51) Int. Cl.: H01M 10/44

(54) **ELECTROCHEMICAL APPARATUS MANAGEMENT METHOD, SYSTEM, ELECTROCHEMICAL APPARATUS AND ELECTRONIC DEVICE**

(71) Applicant: DONGGUAN POWERAMP TECHNOLOGY LIMITED, Dongguan, Guangdong 523808 (CN); Ningde Amperex Technology Limited, Ningde, Fujian 352100 (CN)
(72) Inventor: CHENG, Yarui, Dongguan, Guangdong 523808 (CN); WANG, Huixin, Dongguan, Guangdong 523808 (CN); JIE, Xiao, Dongguan, Guangdong 523808 (CN); HE, Guoda, Dongguan, Guangdong 523808 (CN)
(74) Representative: Klunker IP Patentanwälte PartG mbB
(86) International application number: PCT/CN2021/126452
(87) International publication number: WO 2023/070323

(57) **Abstract**

Some embodiments of this application provide an electrochemical apparatus management method, a system, an electrochemical apparatus, and an electronic device. The method includes: performing a first charge-discharge cycle on an electrochemical apparatus at a charge current; at a first moment after the first charge-discharge cycle, obtaining an SOH₁ of the electrochemical apparatus; in response to the SOH₁ satisfying a preset condition, performing an intermittent charge operation on the electrochemical apparatus at a first detection current, obtaining data related to the electrochemical apparatus in the intermittent charge operation, and determining a current lithium precipitation SOC₁ of the electrochemical apparatus based on the data related to the electrochemical apparatus; and in response to the SOC₁ being higher than a first SOC threshold, performing a second charge-discharge cycle on the electrochemical apparatus at the charge current, in response to the SOC₁ being lower than or equal to the first SOC threshold and higher than or equal to a second SOC threshold, controlling the electrochemical apparatus to perform a risk control operation, or in response to the SOC₁ being lower than the second SOC threshold, controlling the electrochemical apparatus to stop operating. Some embodiments of this application can reduce the risk of lithium precipitation and improve the safety of the electrochemical apparatus.

## Description

### TECHNICAL FIELD

This application relates to the field of electrochemistry technologies, and specifically, to an electrochemical apparatus management method, a system, an electrochemical apparatus, and an electronic device.

### BACKGROUND

Lithium-ion batteries have many characteristics such as large specific energy density and long cycle life, and therefore are widely used in the field of consumer electronics.

During the use of lithium-ion batteries, lithium precipitation may occur, and when the risk of battery lithium precipitation is detected, it is necessary to take timely measures to reduce the risk of lithium precipitation to ensure battery safety. Therefore, a new lithium precipitation detection method is required to improve the safety performance of batteries.

### SUMMARY

Some embodiments of this application are intended to provide an electrochemical apparatus management method, a system, an electrochemical apparatus, and an electronic device that can improve the safety performance of batteries. The technical solutions provided in some embodiments of this application can further reduce the frequency of lithium precipitation detection and detection time. Specific technical solutions are as follows:

A first aspect of some embodiments of this application provides an electrochemical apparatus management method including: S1: performing a first charge-discharge cycle on an electrochemical apparatus at a charge current; S2: at a first moment after the first charge-discharge cycle, obtaining an SOH of the electrochemical apparatus to serve as an SOH₁; S3: in response to the SOH₁ satisfying a preset condition, performing an intermittent charge operation on the electrochemical apparatus at a first detection current, obtaining data related to the electrochemical apparatus in the intermittent charge operation, and determining a current lithium precipitation SOC of the electrochemical apparatus based on the data related to the electrochemical apparatus to serve as an SOC₁; and S4-1: in response to the SOC₁ being higher than a first SOC threshold, performing a second charge-discharge cycle on the electrochemical apparatus at the charge current, S4-2: in response to the SOC₁ being lower than or equal to the first SOC threshold and higher than or equal to a second SOC threshold, controlling the electrochemical apparatus to perform a risk control operation, where the second SOC threshold is lower than the first SOC threshold, or S4-3: in response to the SOC₁ being lower than the second SOC threshold, controlling the electrochemical apparatus to stop operating.

The technical effects of some embodiments of this application are as follows. The SOH₁ of the electrochemical apparatus may be obtained at the first moment after the first charge-discharge cycle, and lithium precipitation detection analysis can be performed on the electrochemical apparatus when the SOH₁ satisfies the preset condition, thereby reducing the frequency of lithium precipitation detection. Furthermore, the intermittent charge operation is performed on the electrochemical apparatus, the data related to the electrochemical apparatus is obtained in the intermittent charge operation, the lithium precipitation SOC of the electrochemical apparatus is determined based on the related data to serve as an SOC₁, and then based on the relationship between the SOC₁ and the first SOC threshold and second SOC threshold, the electrochemical apparatus is controlled to stop operating or the electrochemical apparatus is controlled to perform a risk control operation. This reduces the safety hazards caused when the electrochemical apparatus is still used after lithium precipitation, thereby improving the safety of the electrochemical apparatus during use.

In an implementation of some embodiments of this application, the in response to the SOH₁ satisfying a preset condition includes: in response to the SOH₁ not being higher than a first threshold. In some embodiments of this application, when the SOH₁ is not higher than the first threshold, lithium precipitation detection analysis is performed on the electrochemical apparatus, reducing the frequency of lithium precipitation detection and improving the safety of the electrochemical apparatus during use.

In an implementation of some embodiments of this application, the method further includes: S5: at a second moment after step S4-1 or step S4-2 is executed, obtaining a current SOH of the electrochemical apparatus to serve as an SOH₂; and S6: in response to the SOH₂ being not higher than a second threshold, performing an intermittent charge operation on the electrochemical apparatus at a second detection current, obtaining data related to the electrochemical apparatus in the intermittent charge operation, and determining a current lithium precipitation SOC of the electrochemical apparatus based on the data related to the electrochemical apparatus to serve as an SOC₂, where the second threshold is lower than the first threshold. In some embodiments of this application, the SOH₂ is used as a determining criterion for performing lithium precipitation detection analysis, reducing the frequency of lithium precipitation detection. Further, lithium precipitation detection analysis may be performed on the electrochemical apparatus throughout the entire life cycle of the electrochemical apparatus, thereby reducing the risk of lithium precipitation of the electrochemical apparatus throughout the entire life cycle.

In an implementation of some embodiments of this application, the second threshold is determined in the following steps, including: obtaining a mapping table of SOH and SOC, where the mapping table includes multiple SOHs and multiple SOCs; determining an SOH in the mapping table that is closest to the SOH₁ as a parameter SOH₁'; determining an SOC corresponding to the SOH₁' in the mapping table as an SOC₁'; determining, as an SOC₂', an SOC that is lower than the SOC₁' and whose difference to the SOC₁' is a first difference; and determining an SOH corresponding to the SOC₂' in the mapping table as the second threshold. In some embodiments of this application, the second threshold for performing lithium precipitation detection analysis is determined through the mapping table, reducing the frequency of lithium precipitation detection.

In an implementation of some embodiments of this application, the method further includes: S7-1: in response to the SOC₂ being higher than the SOC₂', performing a third charge-discharge cycle on the electrochemical apparatus at the charge current; S7-2: in response to the SOC₂ being lower than or equal to the SOC₂' and higher than or equal to the second SOC threshold, controlling the electrochemical apparatus to perform a risk control operation; or S7-3: in response to the SOC₂ being lower than the second SOC threshold, controlling the electrochemical apparatus to stop operating. In some embodiments of this application, the intermittent charge operation is performed on the electrochemical apparatus, and based on the relationship between the SOH₂ and the SOC₂' and second SOC threshold, the electrochemical apparatus is controlled to stop operating or the electrochemical apparatus is controlled to perform a risk control operation. This reduces the safety hazards caused when the electrochemical apparatus is still used after lithium precipitation, thereby improving the safety of the electrochemical apparatus during use.

In an implementation of some embodiments of this application, the method further includes: at a third moment after step S7-1 or step S7-2 is executed, obtaining a current SOH of the electrochemical apparatus to serve as an SOH₃; and in response to the SOH₃ being not higher than a third threshold, performing an intermittent charge operation on the electrochemical apparatus at the detection current, where the third threshold is lower than the second threshold. In some embodiments of this application, the SOH₃ is used as a determining criterion for performing lithium precipitation detection analysis, reducing the frequency of lithium precipitation detection. Further, lithium precipitation detection analysis may be performed on the electrochemical apparatus throughout the entire life cycle of the electrochemical apparatus, thereby reducing the risk of lithium precipitation of the electrochemical apparatus throughout the entire life cycle.

In an implementation of some embodiments of this application, the third threshold is determined in the following steps, including: determining, as an SOC₃', an SOC that is lower than the SOC₂' and whose difference to the SOC₂' is a second difference, where the second difference is lower than the first difference; and determining an SOH corresponding to the SOC₃' in the mapping table as the third threshold. In some embodiments of this application, the second difference is lower than the first difference, and the frequency of determining the lithium precipitation SOC of the electrochemical apparatus can be appropriately increased as the use time of the electrochemical apparatus increases, thereby reducing the number of lithium precipitation detection analyses while the safety of the electrochemical apparatus during use is improved.

In an implementation of some embodiments of this application, the risk control operation includes at least one of: reducing a charge voltage of the electrochemical apparatus, reducing a charge current of the electrochemical apparatus, performing staged charge on the electrochemical apparatus, or generating risk prompt information. In some embodiments of this application, when the SOC₁ is lower than or equal to the first SOC threshold, the electrochemical apparatus is controlled to perform at least one of reducing a charge voltage of the electrochemical apparatus, reducing a charge current of the electrochemical apparatus, performing staged charge on the electrochemical apparatus, or generating risk prompt information, thereby reducing the safety hazards caused when the electrochemical apparatus is still used after lithium precipitation and improving the safety of the electrochemical apparatus during use.

In an implementation of some embodiments of this application, the electrochemical apparatus is a nickel-cobalt-manganese system electrochemical apparatus, and the second SOC threshold is higher than or equal to 10% and lower than or equal to 30%; the electrochemical apparatus is a lithium manganate system electrochemical apparatus, and the second SOC threshold is higher than or equal to 20% and lower than or equal to 40%; or the electrochemical apparatus is a lithium iron phosphate system electrochemical apparatus, and the second SOC threshold is higher than or equal to 10% and lower than or equal to 40%. In some embodiments of this application, different second SOC thresholds are provided for electrochemical apparatuses of different systems, and therefore, times to stop operating can be more accurately determined for the electrochemical apparatuses of different systems, thereby improving the safety of the electrochemical apparatuses of different systems during use.

In an implementation of some embodiments of this application, the data related to the electrochemical apparatus includes an SOC of the electrochemical apparatus and an internal resistance of the electrochemical apparatus, the intermittent charge operation includes multiple charge periods and multiple interruption periods, and the step of obtaining data related to the electrochemical apparatus in the intermittent charge operation, and determining the SOC₁ based on the data related to the electrochemical apparatus includes: in the intermittent charge operation, for each of the multiple interruption periods, obtaining an SOC of the electrochemical apparatus and an internal resistance of the electrochemical apparatus that are corresponding to the interruption period, and obtaining a first curve based on the obtained multiple SOCs of the electrochemical apparatus and the multiple internal resistances of the electrochemical apparatus corresponding to the multiple SOCs, where the first curve is a corresponding mapping curve between the SOCs and internal resistances of the electrochemical apparatus; and determining the SOC₁ based on the first curve.

In an implementation of some embodiments of this application, the step of determining the SOC₁ based on the first curve includes at least one of method 1 or method 2, where method 1 includes: performing a first-order differential on the first curve to obtain a second curve, and determining, as the SOC₁, an SOC corresponding to a point at which the second curve first has a negative slope; and method 2 includes: performing a first-order differential on the first curve to obtain a second curve, performing a second-order differential on the second curve to obtain a third curve, and determining, as the SOC₁, an SOC corresponding to a point at which the third curve first has a vertical coordinate less than zero.

In an implementation of some embodiments of this application, the intermittent charge operation includes multiple charge periods, each charge cycle includes a charge period and an interruption period, and in each charge cycle, SOC of the electrochemical apparatus increases by a unit amplitude. In some embodiments of this application, the lithium precipitation SOC of the electrochemical apparatus can be determined based on the intermittent charge operation, reducing the risk of lithium precipitation of the electrochemical apparatus.

In an implementation of some embodiments of this application, the electrochemical apparatus includes at least one of lithium iron phosphate system electrochemical apparatus, lithium nickel manganese cobalt system electrochemical apparatus, or lithium cobalt oxide system electrochemical apparatus, where in a case that the electrochemical apparatus is a lithium iron phosphate system electrochemical apparatus, the unit amplitude ranges from 0.5% to 10%, and a duration of the interruption period ranges from 1 second to 15 seconds; in a case that the electrochemical apparatus is a lithium nickel manganese cobalt system electrochemical apparatus, the unit amplitude ranges from 0.5% to 10%, and a duration of the interruption period ranges from 1 second to 30 seconds; or in a case that the electrochemical apparatus is a lithium cobalt oxide system electrochemical apparatus, the unit amplitude ranges from 0.5% to 10%, and a duration of the interruption period ranges from 1 second to 30 seconds. In some embodiments of this application, a more targeted intermittent charge operation can be performed on the electrochemical apparatuses of different systems, so that a more accurate lithium precipitation SOC can be obtained for the electrochemical apparatuses of different systems.

In an implementation of some embodiments of this application, the method satisfies any one of conditions (a) to (f): (a) in a case that the electrochemical apparatus is a lithium iron phosphate system electrochemical apparatus and the electrochemical apparatus is at an ambient temperature of -10°C to 10°C, the unit amplitude ranges from 0.5% to 10%, and a duration of the interruption period ranges from 5 seconds to 15 seconds; (b) in a case that the electrochemical apparatus is a lithium iron phosphate system electrochemical apparatus and the electrochemical apparatus is at an ambient temperature of 10°C to 45°C, the unit amplitude ranges from 0.5% to 10%, and a duration of the interruption period ranges from 1 second to 10 seconds; (c) in a case that the electrochemical apparatus is a lithium nickel manganese cobalt system electrochemical apparatus and the electrochemical apparatus is at an ambient temperature of -10°C to 10°C, the unit amplitude ranges from 0.5% to 10%, and a duration of the interruption period ranges from 10 seconds to 30 seconds; (d) in a case that the electrochemical apparatus is a lithium nickel manganese cobalt system electrochemical apparatus and the electrochemical apparatus is at an ambient temperature of 10°C to 45°C, the unit amplitude ranges from 0.5% to 10%, and a duration of the interruption period ranges from 1 second to 10 seconds; (e) in a case that the electrochemical apparatus is a lithium cobalt oxide system electrochemical apparatus and the electrochemical apparatus is at an ambient temperature of -10°C to 10°C, the unit amplitude ranges from 0.5% to 10%, and a duration of the interruption period ranges from 15 seconds to 30 seconds; or (f) in a case that the electrochemical apparatus is a lithium cobalt oxide system electrochemical apparatus and the electrochemical apparatus is at an ambient temperature of 10°C to 45°C, the unit amplitude ranges from 0.5% to 10%, and a duration of the interruption period ranges from 1 second to 10 seconds. In some embodiments of this application, a more targeted intermittent charge operation can be performed on the electrochemical apparatuses in different ambient environments, so that a more accurate lithium precipitation SOC can be obtained for the electrochemical apparatuses of different systems.

A second aspect of some embodiments of this application provides a system including a processor and a machine-readable storage medium, where the machine-readable storage medium stores a machine-executable instruction capable of being executed by the processor, and when the processor executes the machine-executable instruction, the method according to any one of the foregoing aspects is implemented.

A third aspect of some embodiments of this application provides an electrochemical apparatus. The electrochemical apparatus includes the system according to the third aspect.

A fourth aspect of some embodiments of this application provides an electronic device. The electronic device includes the electrochemical apparatus according to the fourth aspect.

A fifth aspect of some embodiments of this application provides a computer-readable storage medium. The computer-readable storage medium stores a computer program, and when the computer program is run by a processor, the method according to any one of the foregoing aspects is implemented.

Some embodiments of this application provide an electrochemical apparatus management method, a system, an electrochemical apparatus, and an electronic device. Lithium precipitation detection analysis can be performed on the electrochemical apparatus when the SOH₁ of the electrochemical apparatus is obtained at the first moment after the first charge-discharge cycle and when the SOH₁ satisfies the preset condition, thereby reducing the frequency of lithium precipitation detection. Furthermore, the intermittent charge operation is performed on the electrochemical apparatus, the data related to the electrochemical apparatus is obtained in the intermittent charge operation, the lithium precipitation SOC of the electrochemical apparatus is determined based on the related data to serve as an SOC₁, and then based on the relationship between the SOC₁ and the first SOC threshold and second SOC threshold, the electrochemical apparatus is controlled to stop operating or the electrochemical apparatus is controlled to perform a risk control operation. This reduces the safety hazards caused when the electrochemical apparatus is still used after lithium precipitation, thereby improving the safety of the electrochemical apparatus during use. Certainly, when any one of the products or methods of some embodiments of this application is implemented, all advantages described above are not necessarily demonstrated simultaneously.

### BRIEF DESCRIPTION OF DRAWINGS

To describe technical solutions in the embodiments of this application and the prior art more clearly, the following briefly describes accompanying drawings required in the embodiments and the prior art. Apparently, the accompanying drawings in the following descriptions show merely some embodiments in this application, and persons of ordinary skill in the art may derive other drawings from these accompanying drawings.
FIG. 1 is a schematic flowchart of an electrochemical apparatus management method according to an implementation of this application;
FIG. 2 is a mapping table of SOH and SOC according to an implementation of this application;
FIG. 3 is a schematic diagram of risk prompt information according to an implementation of this application;
FIG. 4 is a schematic flowchart of determining a second threshold according to an implementation of this application;
FIG. 5 is another schematic flowchart of an electrochemical apparatus management method according to an implementation of this application;
FIG. 6 is still another schematic flowchart of an electrochemical apparatus management method according to an implementation of this application;
FIG. 7 is a schematic diagram of a first curve according to an implementation of this application;
FIG. 8 is a schematic diagram of a second curve according to an implementation of this application;
FIG. 9 is a schematic structural diagram of a system according to an implementation of this application; and
FIG. 10 is a schematic structural diagram of a system according to another implementation of this application;

### DESCRIPTION OF EMBODIMENTS

To make the objectives, technical solutions, and advantages of this application more comprehensible, the following describes this application in detail with reference to accompanying drawings and embodiments. Apparently, the described embodiments are merely some but not all of the embodiments of this application. All other embodiments obtained by persons of ordinary skill in the art based on the embodiments of this application falls within the protection scope of this application.

It should be noted that in the content of this application, a lithium-ion battery is used as an example of an electrochemical apparatus to explain this application. However, the electrochemical apparatus of this application is not limited to the lithium-ion battery.

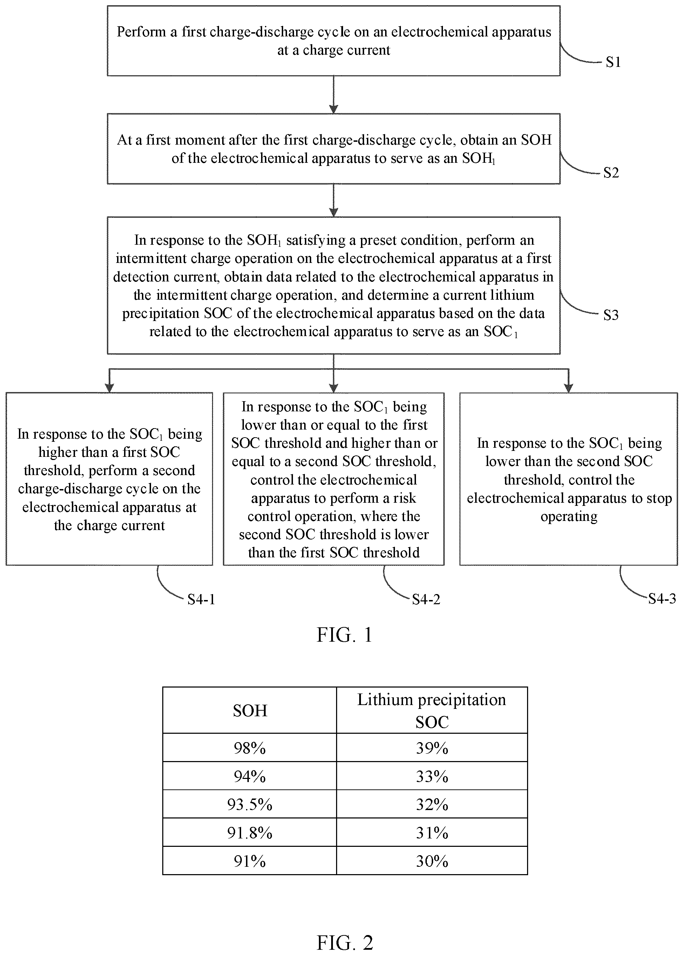

Some embodiments of this application provide an electrochemical apparatus management method. As shown in FIG. 1, the method includes the following steps.

S1: Perform a first charge-discharge cycle on an electrochemical apparatus at a charge current.

Some embodiments of this application may be executed by a battery management system. During the operation of the electrochemical apparatus, the battery management system can manage the electrochemical apparatus, such as managing the charge and discharge processes of the electrochemical apparatus.

In some embodiments of this application, the battery management system can control the charge current during the charge-discharge cycle process of the electrochemical apparatus. For example, during the operation of the electrochemical apparatus, a charge and discharge apparatus in the battery management system performs a charge-discharge cycle on the electrochemical apparatus at a charge current. The charge-discharge cycle in some embodiments of this application can refer to a cycle of charge, discharge, and charge of the electrochemical apparatus during operation. In the first charge-discharge cycle, the electrochemical apparatus may be charged at the charge current in the charge stage thereof. In addition, the discharge current in the charge-discharge cycle may be adapted depending on electric device. This is not limited in some embodiments of this application.

The structure of the charge and discharge apparatus is not particularly limited in some embodiments of this application, for example, including a charge and discharge circuit well known in the art. This is not limited in some embodiments of this application. The charge current is not particularly limited in some embodiments of this application. For example, it may be any current between 0.1A and 3A, such as 0.1A, 0.2A, 0.3A, 0.5A, 0.7A, 1A, 1.5A, 2A, 2.5A, or 3A.

S2: At a first moment after the first charge-discharge cycle, obtain an SOH of the electrochemical apparatus to serve as an SOH₁.

The first moment may be a moment when the first charge-discharge cycle ends, and the SOH (State Of Health, state of health) of the electrochemical apparatus may be a capacity retention rate, battery capacity, performance status, or the like of the electrochemical apparatus. Optionally, the SOH of the electrochemical apparatus may be read in real time by using an SOH reading algorithm.

S3: In response to the SOH₁ satisfying a preset condition, perform an intermittent charge operation on the electrochemical apparatus at a first detection current, obtain data related to the electrochemical apparatus in the intermittent charge operation, and determine a current lithium precipitation SOC of the electrochemical apparatus based on the data related to the electrochemical apparatus to serve as an SOC₁.

The preset condition may be determined depending on actual application scenarios and requirements. Optionally, when the SOH₁ is not higher than the first threshold, that is, when SOH₁ is lower than or equal to the first threshold, it may be considered that the SOH₁ satisfies the preset condition. The first threshold may be set depending on demands or a threshold set in advance. In addition, the first threshold may be stored in advance in a storage medium connected to the electrochemical apparatus. When the SOH is a capacity retention rate, the first threshold may be between 95-100%, such as 98%. In this case, when the SOH₁ is not higher than 98%, the electrochemical apparatus is charged with the first detection current in the intermittent charge operation.

The intermittent charge operation may refer to a process of intermittently charging the electrochemical apparatus. The lithium precipitation SOC (State Of Charge, state of charge) may refer to an SOC related to a lithium precipitation state of the electrochemical apparatus.

For example, a lithium precipitation SOC analysis apparatus 902 in the battery management system can perform the intermittent charge operation on the electrochemical apparatus. The lithium precipitation SOC analysis apparatus is not particularly limited in some embodiments of this application, as long as the intermittent charge operation can be implemented. The lithium precipitation SOC analysis apparatus 902 may be a controller unit (Microcontroller Unit, MCU) in the battery management system (Battery Management System, BMS) board. In an example, after the charge and discharge apparatus 901 performs the first charge-discharge cycle on the electrochemical apparatus, the lithium precipitation SOC analysis apparatus 902 obtains the SOH₁ at the first moment after the first charge-discharge cycle ends, and in response to SOH₁ satisfying the preset condition, performs the intermittent charge operation on the electrochemical apparatus at the first detection current, performs lithium precipitation detection analysis on the electrochemical apparatus during the intermittent charge operation, obtains the data related to the electrochemical apparatus in the intermittent charge operation, and determines, as the SOC₁, the lithium precipitation SOC of the electrochemical apparatus based on the data related to the electrochemical apparatus. The operations in the foregoing process are for the purpose of description only.

The data related to the electrochemical apparatus may refer to data that can reflect the status of the electrochemical apparatus, including but not limited to data such as charge voltage, charge current, internal resistance, and SOC of the electrochemical apparatus. The charge method in the intermittent charge operation is not particularly limited in some embodiments of this application, as long as the purpose of some embodiments of this application can be achieved. The charge may be constant voltage charge, constant current charge, constant current and constant voltage charge, or staged constant current charge.

S4-1: In response to the SOC₁ being higher than a first SOC threshold, perform a second charge-discharge cycle on the electrochemical apparatus at the charge current.

In some embodiments, the first SOC threshold may be an SOC that has a mapping relationship with the SOH₁ in the mapping table of SOH and SOC. FIG. 2 shows a mapping table of SOH and SOC according to an embodiment of this application. The mapping table may be obtained by measuring the electrochemical apparatus under experimental conditions in advance. If the SOH₁ is 98%, the first SOC threshold is 39%.

For example, under the experimental conditions of room temperature of 25°C±5°C, the electrochemical apparatus is subjected to cyclic charge and discharge at a specified charge current and charge voltage by using a cyclic method including constant current constant voltage continuous cycling or constant current constant voltage conditional cycling, to measure lithium precipitation SOCs mapped to different SOHs, so as to obtain the mapping table of SOH and SOC.

It should be noted that since the lithium precipitation SOC is related to temperature, there are different mapping tables between SOH and SOC corresponding to different temperature ranges of the electrochemical apparatus. Therefore, in some embodiments of this application, before the first SOC threshold is determined, the mapping table of SOH and SOC corresponding to a current temperature of the electrochemical apparatus may be determined first, and then based on the mapping table of SOH and SOC, the SOC mapped to the SOH₁ is determined as the first SOC threshold.

It can be understood that in some embodiments of this application, the mapping table of SOH and SOC may take the form of table, take the form of function relationship, or take the form of algorithm model, as long as an SOH-SOC mapping can be represented.

For the electrochemical apparatus, when the lithium precipitation SOC of the electrochemical apparatus is low to a certain extent, there is a risk that the battery cell inside the electrochemical apparatus catches fire if still used. In order to determine in advance that the electrochemical apparatus is subjected to a risk of catching fire if still used, the first SOC threshold may be higher than the lithium precipitation SOC at which the electrochemical apparatus has a risk of catching fire.

After the SOC₁ is determined, when the SOC₁ is higher than the first SOC threshold, it indicates that the electrochemical apparatus has not subjected to lithium precipitation yet and therefore can continue operating. Based on this, in some embodiments of this application, the second charge-discharge cycle may be performed on the electrochemical apparatus at the charge current to make the electrochemical apparatus maintain operating. This alleviates the "false killing" problem that the electrochemical apparatus is discarded before its service life is reached.

In an example, the lithium precipitation SOC analysis apparatus 902 performs lithium precipitation detection analysis on the electrochemical apparatus during the intermittent charge operation, and when the SOC₁ is higher than the first SOC threshold, sends a first signal to the charge and discharge apparatus 901. After receiving the first signal, the charge and discharge apparatus 901 performs the second charge-discharge cycle on the electrochemical apparatus at the charge current.

The number of second charge-discharge cycles may be smaller than or equal to the number of first charge-discharge cycles. This is because as the cycling of the electrochemical apparatus continues, a lithium precipitation window thereof gradually narrows, that is, lithium precipitation is more likely to occur. Therefore, the number of second charge-discharge cycles is set to be smaller than the number of first charge-discharge cycles, so that after the number of second charge-discharge cycles, whether lithium precipitation detection analysis is required on the electrochemical apparatus can be determined again.

In some embodiments of this application, for example, the number of first charge-discharge cycles may be 1 to 500, and the number of second charge-discharge cycles may be 1 to 100. The operations of the process shown above are for illustrative purposes only. In addition, the apparatuses and modules in the battery management system examples in some embodiments of this application are only for illustrative purposes rather than restrictive purposes.

S4-2: In response to the SOC₁ being lower than or equal to the first SOC threshold and higher than or equal to a second SOC threshold, control the electrochemical apparatus to perform a risk control operation, where the second SOC threshold is lower than the first SOC threshold.

The second SOC threshold may be a lithium precipitation SOC at which the battery cell inside the electrochemical apparatus will catch fire if it is still used. When the electrochemical apparatus is a nickel-cobalt-manganese system electrochemical apparatus, the second SOC threshold is higher than or equal to 10% and lower than or equal to 30%; when the electrochemical apparatus is a lithium manganate system electrochemical apparatus, the second SOC threshold is higher than or equal to 20% and lower than or equal to 40%; or when the electrochemical apparatus is a lithium iron phosphate system electrochemical apparatus, the second SOC threshold is higher than or equal to 10% and lower than or equal to 40%. In some embodiments of this application, the second SOC threshold is lower than the first SOC threshold.

When the SOC₁ is lower than or equal to the first SOC threshold and higher than or equal to the second SOC threshold, it indicates that the electrochemical apparatus has a low risk of lithium precipitation and therefore can still be used. In this case, the risk in continual use of the electrochemical apparatus can be reduced by performing a risk control operation.

The risk control operation includes an operation that can reduce the safety risk of the battery.

For example, the risk can be reduced by adjusting the charge current, charge voltage, charge mode, and the like of the electrochemical apparatus. The charge mode includes a combination of one or more constant current charge, constant voltage charge, direct current charge, and alternating current charge. Example charge modes include constant current-constant voltage charge and multi-stage constant current-constant voltage charge. The constant current-constant voltage charge includes at least one constant current-constant voltage charge stage. Charge and discharge parameters of multiple constant current-constant voltage charge stages can be set to the same or different, and are not limited herein. The multi-stage constant current-constant voltage charge includes multiple consecutive constant current charge stages and one constant voltage charge stage. Charge and discharge parameters of the multiple constant current charge stages can be set to the same or different, and are not limited herein.

In an example, the lithium precipitation SOC analysis apparatus 902 performs the intermittent charge operation on the electrochemical apparatus, performs lithium precipitation detection analysis during the intermittent charge operation, and when the SOC₁ is lower than or equal to the first SOC threshold and higher than or equal to the second SOC threshold, sends a second signal to a protection apparatus 903. After receiving the second signal, the protection apparatus 903 can perform a risk control operation.

In some embodiments, the risk control operation includes at least one of: reducing a charge voltage of the electrochemical apparatus, reducing a charge current of the electrochemical apparatus, performing staged charge on the electrochemical apparatus, or generating risk prompt information.

The staged charge includes multiple charge stages. At least two of the multiple charge stages have different charge parameters or charge modes. For example, in different charge stages of the electrochemical apparatus, currents or voltages of different magnitudes or different charge modes may be used to charge the electrochemical apparatus.

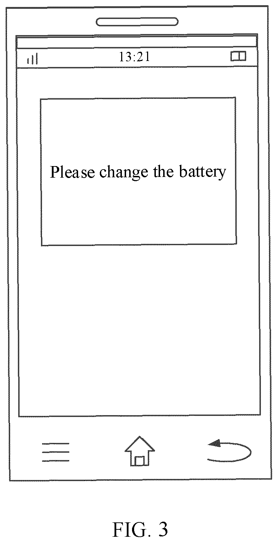

The generating risk prompt information may include generating reminders to replace the electrochemical apparatus, perform maintenance on the electrochemical apparatus, replace the charge method of the electrochemical apparatus, and the like. For example, FIG. 3 is a schematic diagram of risk prompt information according to the embodiments of this application. In FIG. 3, a user is reminded to replace the electrochemical apparatus through the text "Please change the battery". Certainly, in addition to texts, the risk prompt information may also take other forms such as videos, pictures, or audios. This is not specifically limited in the embodiments of this application. Optionally, the risk prompt information may be provided in any interactive manner such as text message, application message, email, or phone call. For example, the risk prompt information in FIG. 3 may be displayed through an application program.

Controlling the electrochemical apparatus to perform the risk control operation can reduce the risk of lithium precipitation caused by continual use of the electrochemical apparatus, thereby improving the use safety of the electrochemical apparatus. The operations of the process shown above are for illustrative purposes only. In addition, the apparatuses and modules in the electronic device examples in some embodiments of this application are only for illustrative purposes rather than restrictive purposes.

S4-3: In response to the SOC₁ being lower than the second SOC threshold, control the electrochemical apparatus to stop operating.

When the SOC₁ is lower than the second SOC threshold, it indicates that the lithium precipitation SOC of the electrochemical apparatus has become very small, and the electrochemical apparatus is severely aged and therefore is not suitable for use any more. In this case, the electrochemical apparatus can be disconnected to stop the electrochemical apparatus from working, reduce the risk of lithium precipitation in the electrochemical apparatus caused by continued operation, and improve the use safety of the electrochemical apparatus.

In an example, the lithium precipitation SOC analysis apparatus 902 performs lithium precipitation detection analysis during the intermittent charge operation, and sends a third signal to the protection apparatus 903 when the lithium precipitation SOC₁ is lower than the second SOC threshold. After receiving the third signal, the protection apparatus 903 disconnects the electrical connection to the electrochemical apparatus so as to stop the electrochemical apparatus from operation. The operations of the process shown above are for illustrative purposes only. In addition, the apparatuses and modules in the battery management system examples in some embodiments of this application are only for illustrative purposes rather than restrictive purposes.

Some embodiments of this application provide an electrochemical apparatus management method. Lithium precipitation detection analysis can be performed on the electrochemical apparatus when the SOH₁ of the electrochemical apparatus is obtained at the first moment after the first charge-discharge cycle and when the SOH₁ satisfies the preset condition, thereby reducing the frequency of lithium precipitation detection. Furthermore, the intermittent charge operation is performed on the electrochemical apparatus, the data related to the electrochemical apparatus is obtained in the intermittent charge operation, the lithium precipitation SOC of the electrochemical apparatus is determined based on the related data to serve as an SOC₁, and then based on the relationship between the SOC₁ and the first SOC threshold and second SOC threshold, the electrochemical apparatus is controlled to stop operating or the electrochemical apparatus is controlled to perform a risk control operation. This reduces the safety hazards caused when the electrochemical apparatus is still used after lithium precipitation, thereby improving the safety of the electrochemical apparatus during use. Certainly, when any one of the products or methods of some embodiments of this application is implemented, all advantages described above are not necessarily demonstrated simultaneously.

In an implementation of this application, an electrochemical apparatus management method is further provided and includes the following steps.

S5: At a second moment after step S4-1 or step S4-2 is executed, obtain a current SOH of the electrochemical apparatus to serve as an SOH₂.

At the second moment after performing the second charge-discharge cycle on the electrochemical apparatus or controlling the electrochemical apparatus to perform the risk control operation, whether lithium precipitation detection analysis needs to be performed on the electrochemical apparatus may continue to be determined. Therefore, at the second moment after step S4-1 or step S4-2 is executed, the current SOH of the electrochemical apparatus may be obtained to serve as the SOH₂.

S6: In response to the SOH₂ being not higher than a second threshold, perform an intermittent charge operation on the electrochemical apparatus at a second detection current, obtain data related to the electrochemical apparatus in the intermittent charge operation, and determine a current lithium precipitation SOC of the electrochemical apparatus based on the data related to the electrochemical apparatus to serve as an SOC₂, where the second threshold is lower than the first threshold.

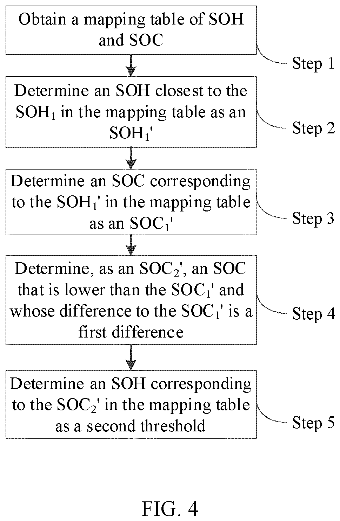

The second threshold is lower than the first threshold. Optionally, FIG. 4 is a schematic flowchart of determining a second threshold, which includes the following steps.

Step 1: Obtain a mapping table of SOH and SOC.

The mapping table includes multiple SOHs and multiple SOCs. As mentioned above, the mapping table of SOH and SOC may be obtained in advance through measurement. In addition, the mapping table of SOH and SOC may be stored in a storage medium of the electrochemical apparatus in advance. Every time after a charge-discharge cycle, the mapping table may be read from the storage medium.

Optionally, since the correlation between SOC and temperature is relatively high, different temperature ranges correspond to different mapping tables between SOH and SOC. In this case, the mapping table of SOH and SOC corresponding to a current temperature of the electrochemical apparatus may be obtained.

Step 2: Determine an SOH closest to the SOH₁ in the mapping table as an SOH₁'.

For example, in the mapping table shown in FIG. 2, if the SOH₁ is 100%, the SOH closest to the SOH₁ is 98%, and the SOH₁' is 98%.

Step 3: Determine an SOC corresponding to the SOH₁' in the mapping table as an SOC₁'.

After the SOH₁' is determined, the SOC corresponding to the SOH₁' in the mapping table can be further determined as the SOC₁'.

For example, in the mapping table shown in FIG. 2, if the SOH₁' is 98%, the SOC corresponding to the SOH₁' is 39%, and then the SOC₁' is determined to be 39%.

Step 4: Determine, as an SOC₂', an SOC that is lower than the SOC₁' and whose difference to the SOC₁' is a first difference.

The first difference may be determined depending on needs. Optionally, the first difference is higher than or equal to 5%. For example, when the SOC₁' is 39%, the SOC₂' may be 33%.

Step 5: Determine an SOH corresponding to the SOC₂' in the mapping table as a second threshold.

After the SOC₂' is determined, an SOH corresponding to the SOC₂' in the mapping table can be further determined as the second threshold.

For example, in the mapping table shown in FIG. 2, the SOC₂' is 33%, the SOC corresponding to SOC₂' is 94%, and the second threshold is determined to be 94%.

When the SOH₂ is not higher than the second threshold, it indicates that the risk of lithium precipitation of the electrochemical apparatus is relatively high. In this case, lithium precipitation risk detection may be performed on the electrochemical apparatus. In response to the SOH₂ being not higher than a second threshold, an intermittent charge operation is performed on the electrochemical apparatus at a second detection current, data related to the electrochemical apparatus is obtained in the intermittent charge operation, and a current lithium precipitation SOC of the electrochemical apparatus is determined based on the data related to the electrochemical apparatus to serve as an SOC₂.

To improve the safety of the electrochemical apparatus, in an implementation of this application, an electrochemical apparatus management method is further provided and includes the following steps.

S7-1: In response to the SOC₂ being higher than the SOC₂', perform a third charge-discharge cycle on the electrochemical apparatus at the charge current.

When the SOC₂ is higher than the first SOC₂', it indicates that the electrochemical apparatus has not subjected to lithium precipitation yet and therefore can continue operating. Based on this, in some embodiments of this application, the third charge-discharge cycle may be performed on the electrochemical apparatus at the charge current to make the electrochemical apparatus maintain operating. This alleviates the "false killing" problem that the electrochemical apparatus is discarded before its service life is reached.

In an example, the lithium precipitation SOC analysis apparatus 902 performs lithium precipitation detection analysis on the electrochemical apparatus during the intermittent charge operation, and when the SOC₂ is higher than the SOC₂', sends a fourth signal to the charge and discharge apparatus 901. After receiving the fourth signal, the charge and discharge apparatus 901 performs the third charge-discharge cycle on the electrochemical apparatus at the charge current.

The number of third charge-discharge cycles may be smaller than or equal to the number of second charge-discharge cycles. This is because as the cycling of the electrochemical apparatus continues, a lithium precipitation window thereof gradually narrows, that is, lithium precipitation is more likely to occur. Therefore, the number of third charge-discharge cycles is set to be smaller than the number of second charge-discharge cycles, so that after the number of third charge-discharge cycles is reached, whether lithium precipitation detection analysis is required on the electrochemical apparatus can be determined again.

S7-2: In response to the SOC₂ being lower than or equal to the SOC₂' and higher than or equal to the second SOC threshold, control the electrochemical apparatus to perform a risk control operation.

When the SOC₂ is lower than or equal to the SOC₂' and higher than or equal to the second SOC threshold, it indicates that the electrochemical apparatus has a low risk of lithium precipitation and therefore can still be used. In this case, the risk in continual use of the electrochemical apparatus can be reduced by performing a risk control operation.

In an example, the lithium precipitation SOC analysis apparatus 902 performs lithium precipitation detection analysis during the intermittent charge operation, and when the SOC₂ is lower than or equal to the SOC₂' and higher than or equal to the second SOC threshold, sends a fifth signal to a protection apparatus 903. After receiving the fifth signal, the protection apparatus 903 can perform a risk control operation.

S7-3: In response to the SOC₂ being lower than the second SOC threshold, control the electrochemical apparatus to stop operating.

When the SOC₂ is lower than the second SOC threshold, it indicates that the lithium precipitation SOC of the electrochemical apparatus has become very small, and the electrochemical apparatus is severely aged and therefore is not suitable for use any more. In this case, the electrochemical apparatus can be disconnected to stop the electrochemical apparatus from working, reduce the risk of lithium precipitation in the electrochemical apparatus caused by continued operation, and improve the use safety of the electrochemical apparatus.

In an example, the lithium precipitation SOC analysis apparatus 902 performs lithium precipitation detection analysis during the intermittent charge operation, and sends a sixth signal to the protection apparatus 903 when the SOC₂ is lower than the second SOC threshold. After receiving the sixth signal, the protection apparatus 903 disconnects the electrical connection to the electrochemical apparatus so as to stop the electrochemical apparatus from operation. The operations of the process shown above are for illustrative purposes only. In addition, the apparatuses and modules in the battery management system examples in some embodiments of this application are only for illustrative purposes rather than restrictive purposes.

In an implementation of this application, at a third moment after step S7-1 or step S7-2 is executed, a current SOH of the electrochemical apparatus is obtained to serve as an SOH₃; and in response to the SOH₃ being not higher than a third threshold, an intermittent charge operation is performed on the electrochemical apparatus at the detection current, where the third threshold is lower than the second threshold.

The third threshold is determined in the following step including:
determining, as an SOC₃', an SOC that is lower than the SOC₂' and whose difference to the SOC₂' is a second difference, where the second difference is lower than the first difference; and determining an SOH corresponding to the SOC₃' in the mapping table as the third threshold.

For example, if the first difference is 5%, the second difference is lower than 5%, such as 1%. As shown in the mapping table in FIG. 2, if the SOC₂' is 33%, the SOC₃' is 32%, and thus the SOH corresponding to 32% in the mapping table is 93.5%. That is, the third threshold is 93.5%.

After the third threshold is determined, whether lithium precipitation detection analysis needs to be performed on the electrochemical apparatus may be further determined based on the third threshold, so as to monitor the electrochemical apparatus throughout the full life cycle thereof, thereby improving the safety of the electrochemical apparatus throughout the entire life cycle.

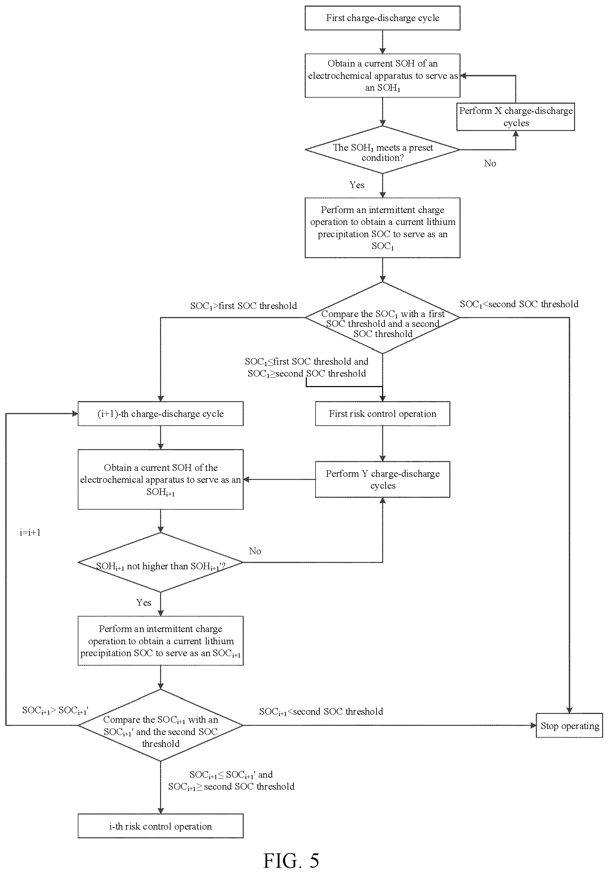

As shown in FIG. 5, an embodiment of this application further provides an electrochemical apparatus management method including the following steps.

### 1. Initial procedure

The electrochemical apparatus is subjected to the first charge-discharge cycle. After the first charge-discharge cycle ends, the current SOH of the electrochemical apparatus is obtained to serve as the SOH₁.

Whether the SOH₁ meets the preset condition is determined. If not, X charge-discharge cycles are performed on the electrochemical apparatus. After the electrochemical apparatus has undergone X cycles, the SOH₁ of the electrochemical apparatus is obtained again until the SOH₁ of the electrochemical apparatus meets the preset condition.

If the electrochemical apparatus meets the preset condition, the intermittent charge operation may be performed on the electrochemical apparatus to obtain the current lithium precipitation SOC of the electrochemical apparatus to serve as the SOC₁, and then the SOC₁ is compared with the first SOC threshold and the second SOC threshold.

If the SOC₁ is higher than the first SOC threshold, it indicates that the chemical apparatus currently has no lithium precipitation and may be used normally. In this case, the electrochemical apparatus enters the normal use procedure.

If the SOC₁ is lower than or equal to the first SOC threshold and the SOC₁ is higher than or equal to the second SOC threshold, it indicates that the electrochemical apparatus has lithium precipitation or has a risk of lithium precipitation, but can still be used. In this case, the electrochemical apparatus enters the risk control procedure.

If the SOC₁ is lower than the second SOC threshold, it indicates that the electrochemical apparatus cannot be used any more. In this case, the electrochemical apparatus is controlled to stop operation.

### 2. Normal use procedure

When the SOC₁ is higher than the first SOC threshold, the electrochemical apparatus enters the normal use procedure.

The electrochemical apparatus is subjected to the (i+1)-th charge-discharge cycle, where i is an integer greater than 0. Optionally, i starts from 1.

After the (i+1)-th charge-discharge cycle ends, the current SOH of the electrochemical apparatus is obtained to serve as an SOHᵢ₊₁.

Whether the SOHᵢ₊₁ is not higher than an SOHᵢ₊₁' is determined. If not, Y charge-discharge cycles are performed on the electrochemical apparatus. After the electrochemical apparatus has undergone Y cycles, the SOHᵢ₊₁ of the electrochemical apparatus is obtained again until the SOHᵢ₊₁ of the electrochemical apparatus is not higher than the SOHᵢ₊₁'.

If the SOHᵢ₊₁ is not higher than the SOHᵢ₊₁', the intermittent charge operation may be performed on the electrochemical apparatus to obtain the current lithium precipitation SOC of the electrochemical apparatus to serve as the SOCᵢ₊₁, and then the SOCᵢ₊₁ is compared with the SOCᵢ₊₁' and the second SOC threshold.

If the SOCᵢ₊₁ is higher than the SOCᵢ₊₁', it indicates that the electrochemical apparatus currently has no lithium precipitation and may be used normally. In this case, i=i+1, and enter the normal use procedure again.

If the SOCᵢ₊₁ is lower than or equal to the SOCᵢ₊₁' and the SOCᵢ₊₁ is higher than or equal to the second SOC threshold, it indicates that the electrochemical apparatus has lithium precipitation or has a risk of lithium precipitation, but can still be used. In this case, the electrochemical apparatus enters the next risk control procedure.

If the SOCᵢ₊₁ is lower than the second SOC threshold, it indicates that the electrochemical apparatus cannot be used any more. In this case, the electrochemical apparatus is controlled to stop operation.

### 3. Risk control procedure

When the SOC₁ is lower than or equal to the first SOC threshold and the SOC₁ is higher than or equal to the second SOC threshold, or the SOCᵢ₊₁ is lower than or equal to the SOCᵢ₊₁' and the SOCᵢ₊₁ is higher than or equal to the second SOC threshold, the risk control procedure is executed to perform at least one of reducing the charge voltage of the electrochemical apparatus, reducing the charge current of the electrochemical apparatus, performing staged charge on the electrochemical apparatus, or generating risk prompt information. Reducing the current is used as an example below. After each entry into the risk control procedure, the charge current of the electrochemical apparatus is reduced, with a previous charge current as a base. If the charge current before the first entry into the risk control procedure (corresponding to the first risk control operation) is 5 A, the charge current becomes 3 A after the risk control operation, the charge current before the second entry into the risk control procedure (corresponding to the (i+1)-th risk control operation when i=1) is 3 A, and the charge current is 2 A after the risk control operation.

After the risk control procedure is performed, the risk control operation is performed first, and Y charge-discharge cycles are performed after the risk control operation.

After the Y-th charge-discharge cycle ends, the current SOH of the electrochemical apparatus is obtained to serve as the SOHᵢ₊₁.

Whether the SOHᵢ₊₁ is not higher than an SOHᵢ₊₁' is determined. If not, Y charge-discharge cycles are performed on the electrochemical apparatus. After the electrochemical apparatus has undergone Y cycles, the SOHᵢ₊₁ of the electrochemical apparatus is obtained again until the SOHᵢ₊₁ of the electrochemical apparatus is not higher than the SOHᵢ₊₁'.

If the SOHᵢ₊₁ is not higher than the SOHᵢ₊₁', the intermittent charge operation may be performed on the electrochemical apparatus to obtain the current lithium precipitation SOC of the electrochemical apparatus to serve as the SOCᵢ₊₁, and then the SOCᵢ₊₁ is compared with the SOCᵢ₊₁' and the second SOC threshold.

If the SOCᵢ₊₁ is higher than the SOCᵢ₊₁', it indicates that the electrochemical apparatus currently has no lithium precipitation and may be used normally. In this case, i=i+1, and enter the normal use procedure again.

If the SOCᵢ₊₁ is lower than or equal to the SOCᵢ₊₁' and the SOCᵢ₊₁ is higher than or equal to the second SOC threshold, it indicates that the electrochemical apparatus has lithium precipitation or has a risk of lithium precipitation, but can still be used. In this case, the electrochemical apparatus enters the next risk control procedure.

If the SOCᵢ₊₁ is lower than the second SOC threshold, it indicates that the electrochemical apparatus cannot be used any more. In this case, the electrochemical apparatus is controlled to stop operation.

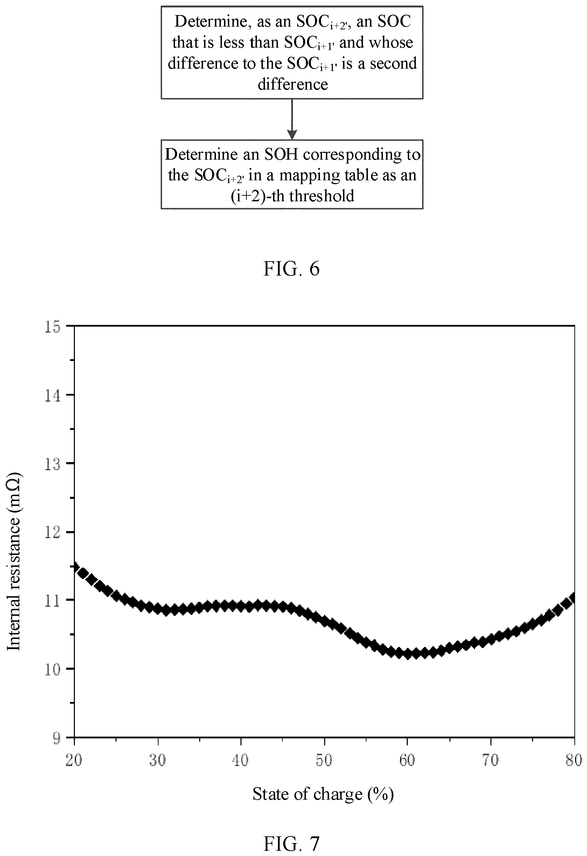

An embodiment of this application further provides an electrochemical apparatus management method. As shown in FIG. 6, determining an (i+2)-th threshold based on the SOCᵢ₊₁' includes the following steps:
determining, as an SOCi+2', an SOC that is lower than SOCᵢ₊₁" and whose difference to the SOCᵢ₊₁' is the second difference; and determining an SOH corresponding to the SOCi+2' in the mapping table as the (i+2)-th threshold.

In an example, an SOC that is lower than the SOC₂' and whose difference to the SOC₂' is the second difference is determined as the SOC₃', where the second difference is lower than the first difference; and an SOH corresponding to the SOC₃' in the mapping table is determined as the third threshold.

The intermittent charge operation may refer to a process of intermittently charging the electrochemical apparatus. In an implementation of this application, the intermittent charge operation includes multiple charge periods and multiple interruption periods. The SOC₁ is determined in the following manner.

Step A: In the intermittent charge operation, for each of the multiple interruption periods, obtain an SOC of the electrochemical apparatus and an internal resistance of the electrochemical apparatus that are corresponding to the interruption period.

Step B: Obtain a first curve based on the obtained multiple SOCs of the electrochemical apparatus and the multiple internal resistances of the electrochemical apparatus corresponding to the multiple SOCs.

In some embodiments of this application, after obtaining the SOCs and internal resistances of the electrochemical apparatus in the multiple interruption periods, multiple data pairs composed of the SOCs and internal resistances may be obtained. Referring to FIG. 7, SOCs of the electrochemical apparatus may be used as horizontal coordinates, and internal resistances of the electrochemical apparatus may be used as vertical coordinates. Points represented by these data pairs are filled in the coordinate system, and fitting is performed to obtain the first curve. The first curve is a corresponding mapping curve between to the SOCs and internal resistances of the electrochemical apparatus.

It can be understood that more SOCs and internal resistances of the electrochemical apparatus collected mean that more data pairs may be obtained, and a more detailed first curve may be obtained. The process of using data for curve fitting is well known to those skilled in the art, and this is not specifically limited in some embodiments of this application.

Step C: Determine the SOC₁ based on the first curve.

The first curve is a curve showing mappings of the SOCs and internal resistances of the electrochemical apparatus, and the SOC₁ may be determined based on the first curve.

The lithium precipitation SOC may not be measured in real time, but is obtained by using a charge voltage obtained during the intermittent charge operation and the correspondence table of charge voltage and SOC. The correspondence table may be stored in advance in the battery management system, electrochemical apparatus, or storage medium of the electronic device.

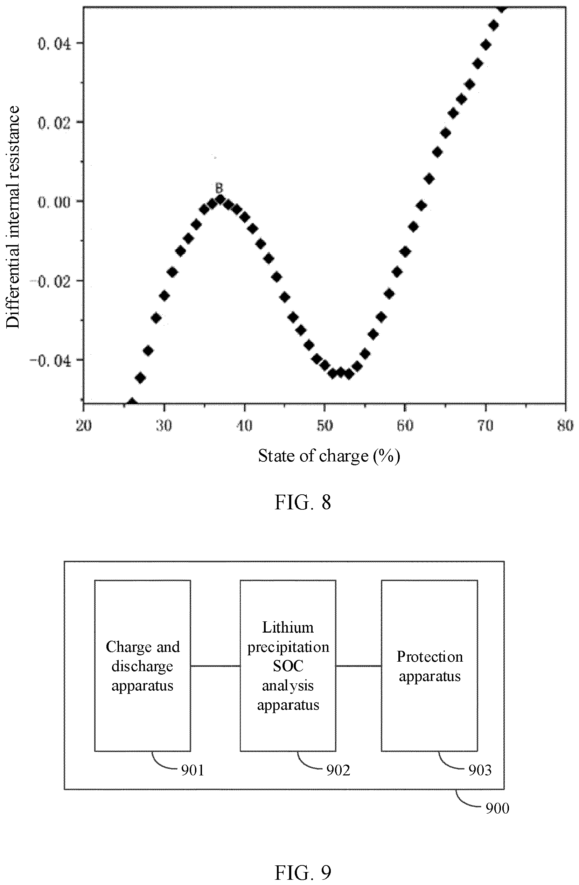

In an implementation, the process of determining the SOC₁ based on the first curve may be method 1. Method 1 includes the following steps.
a: Perform first-order differential on the first curve to obtain a second curve.
   As shown in FIG. 8, after the first curve is subjected to first-order differential, the second curve is obtained. The second curve represents the change rate of the internal resistance of the electrochemical apparatus with respect to the SOC.
b: Determine, as the lithium precipitation SOC, an SOC corresponding to a point at which the second curve first has a negative slope.

The second curve represents the change rate of internal resistance with respect to SOC. When the change rate does not show an abnormal drop in a flat region of the curve, it indicates that no active lithium is precipitated. When the change rate shows an abnormal drop in the flat region of the curve, since the active lithium is precipitated on the surface of the negative electrode and comes into contact with the negative electrode, which is equivalent to a graphite part of the negative electrode being connected in parallel with a lithium metal device, reducing the impedance of the entire negative electrode. As a result, the impedance of the electrochemical apparatus abnormally decreases when active lithium is precipitated, and correspondingly, the abnormal decrease occurs in the in flat region of the second curve. Referring to FIG. 8, point B is the first point in the second curve at which the slope is negative. That is, at point B, an abnormal decrease occurs in the flat region of the second curve for the first time, indicating that the electrochemical apparatus has a tendency to precipitate lithium at point B or has already precipitated lithium. The SOC corresponding to point B can be determined as the SOC₁, so that based on a magnitude relationship between the lithium precipitation SOC and the SOC threshold, the electrochemical apparatus can be protected in a timely manner to improve the use safety of the electrochemical apparatus. The steps a to c are only used to describe the order of the steps, but not to limit the order of the steps.

In an implementation, the process of determining the SOC₁ based on the first curve may be method 2. Method 2 includes:
a': Perform a first-order differential on the first curve to obtain a second curve.
   This step is the same as step a of method 1 and will not be described in detail herein again.
b': Perform a second-order differential on the second curve to obtain a third curve.
   The second-order differential may further be performed on the second curve to obtain the third curve. It can be understood that the third curve is a second-order differential curve of the second curve.
c': Determine, as the SOC₁, an SOC corresponding to a point at which the third curve first has a vertical coordinate less than zero.

If a vertical coordinate of the third curve is less than zero, the SOC corresponding to the point at which the third curve first has a vertical coordinate less than zero is determined as the SOC₁.

The intermittent charge operation in some embodiments of this application includes multiple charge cycles, and each charge cycle includes one charge period and one interruption period. For example, a first charge period and a first interruption period form the first charge cycle, a second charge period and a second interruption period form the second charge cycle, a third charge period and a third interruption period form the third charge cycle, and so on. It can be understood that a charge cycle is a continuous period of time.

For example, the electrochemical apparatus is charged during the first charge period, and then the charge is stopped. After the first interruption period elapses, the electrochemical apparatus is continued to be charged in the second charge period. This is repeated until the SOC of the electrochemical apparatus reaches a first critical value. It can be understood that as intermittent charge continues, the SOC of the electrochemical apparatus increases. In some embodiments of this application, the intermittent charge may be stopped when the SOC of the electrochemical apparatus reaches the first critical value, and the intermittent charge operation is completed. The first critical value is not particularly limited in some embodiments of this application, as long as the purpose of this application can be achieved. For example, the first critical value may be 60%, 70%, 80%, 90%, or 100%.

During the intermittent charge operation, unit amplitudes of SOCs corresponding to different charge cycles may be different. For example, the electrochemical apparatus is charged in the first charge period, and after the SOC of the electrochemical apparatus increases by 1%, the charge is stopped. After an interval of 5 seconds, the electrochemical apparatus is charged during the second charge period, and after the SOC of the electrochemical apparatus increases by 5%, the charge is stopped. After an interval of 5 seconds, the electrochemical apparatus is charged during the third charge period, and after the SOC of the electrochemical apparatus increases by 3%, the charge is stopped. This is repeated until the SOC of the electrochemical apparatus reaches the first threshold.

In an implementation, the intermittent charge operation may be specifically as follows: for any one of multiple charge cycles, the electrochemical apparatus is charged at the first moment until the SOC of the electrochemical apparatus increases by the unit amplitude. Before the third moment, the moment when the charge is stopped is the second moment, and a time interval between the third moment and the second moment is the duration of the interruption period. During the interruption period, the electrochemical apparatus may be in a state of neither being charged nor being discharged, that is, a static state.

For example, at a moment T1, the electrochemical apparatus is charged until the SOC of the electrochemical apparatus increases by the unit amplitude. The moment when the charge is stopped is a moment T2. Starting from the moment T2, the electrochemical apparatus is left standing, and a standing end moment is a moment T3.

In some embodiments of this application, the data related to the electrochemical apparatus can be obtained in the intermittent charge operation by performing the intermittent charge operation on the electrochemical apparatus, and the SOC₁ is determined based on the data, so as to execute the step of charging the electrochemical apparatus at an original charge current or reduced current. This helps to reduce the risk of lithium precipitation of the electrochemical apparatus and prolong the service life of the electrochemical apparatus.

The electrochemical apparatus according to some embodiments of this application includes at least one of lithium iron phosphate system electrochemical apparatus, lithium nickel manganese cobalt system electrochemical apparatus, or lithium cobalt oxide system electrochemical apparatus. Generally speaking, in the intermittent charge operation, electrochemical apparatuses of different systems correspond to different unit amplitudes and different interruption period durations. Hence, there are the following cases.

In an implementation, in a case that the electrochemical apparatus is a lithium iron phosphate system electrochemical apparatus, the unit amplitude ranges from 0.5% to 10%, and a duration of the interruption period cycle ranges from 1 second to 15 seconds.

In an implementation, in a case that the electrochemical apparatus is a lithium nickel manganese cobalt system electrochemical apparatus, the unit amplitude ranges from 0.5% to 10%, and a duration of the interruption period ranges from 1 second to 30 seconds.

In an implementation, in a case that the electrochemical apparatus is a lithium cobalt oxide system electrochemical apparatus, the unit amplitude ranges from 0.5% to 10%, and a duration of the interruption period ranges from 1 second to 30 seconds.

In some embodiments of this application, with different unit amplitudes and different interruption period durations set for electrochemical apparatuses of different systems, a more targeted intermittent charge operation can be performed on the electrochemical apparatuses of different systems, so that a more accurate SOC₁ can be obtained for different systems.

Generally speaking, in the intermittent charge operation, electrochemical apparatuses of a same system correspond to different unit amplitudes and different interruption period durations under different temperatures. Hence, there are the following cases.

In an implementation, in a case that the electrochemical apparatus is a lithium iron phosphate system electrochemical apparatus and the electrochemical apparatus is at an ambient temperature of -10°C to 10°C, the unit amplitude ranges from 0.5% to 10%, and a duration of the interruption period ranges from 5 seconds to 15 seconds. In an implementation, in a case that the electrochemical apparatus is a lithium iron phosphate system electrochemical apparatus and the electrochemical apparatus is at an ambient temperature of 10°C to 45°C, the unit amplitude ranges from 0.5% to 10%, and a duration of the interruption period ranges from 1 second to 10 seconds.

In some embodiments of this application, the positive electrode of the lithium iron phosphate system electrochemical apparatus may further include other positive electrode active materials, but lithium iron phosphate is the main material. For example, the lithium iron phosphate accounts for any one of 51%, 60%, 70%, 80%, 90%, and 98% of the total mass of the positive electrode active material.

In an implementation, in a case that the electrochemical apparatus is a lithium nickel manganese cobalt system electrochemical apparatus and the electrochemical apparatus is at an ambient temperature of -10°C to 10°C, the unit amplitude ranges from 0.5% to 10%, and a duration of the interruption period ranges from 10 seconds to 30 seconds. In an implementation, in a case that the electrochemical apparatus is a lithium nickel manganese cobalt system electrochemical apparatus and the electrochemical apparatus is at an ambient temperature of 10°C to 45°C, the unit amplitude ranges from 0.5% to 10%, and a duration of the interruption period ranges from 1 second to 10 seconds.

In some embodiments of this application, the positive electrode of the lithium nickel manganese cobalt system electrochemical apparatus may further include other positive electrode active materials, but lithium nickel manganese cobalt is the main material. For example, the lithium nickel manganese cobalt accounts for any one of 51%, 60%, 70%, 80%, 90%, and 98% of the total mass of the positive electrode active material.

In an implementation, in a case that the electrochemical apparatus is a lithium cobalt oxide system electrochemical apparatus and the electrochemical apparatus is at an ambient temperature of -10°C to 10°C, the unit amplitude ranges from 0.5% to 10%, and a duration of the interruption period ranges from 15 seconds to 30 seconds. In an implementation, in a case that the electrochemical apparatus is a lithium cobalt oxide system electrochemical apparatus and the electrochemical apparatus is at an ambient temperature of 10°C to 45°C, the unit amplitude ranges from 0.5% to 10%, and a duration of the interruption period ranges from 1 second to 10 seconds.

In some embodiments of this application, the positive electrode of the lithium cobalt oxide system electrochemical apparatus may further include other positive electrode active materials, but lithium cobalt is the main material. For example, the lithium cobalt accounts for any one of 51%, 60%, 70%, 80%, 90%, and 98% of the total mass of the positive electrode active material.

In some embodiments of this application, with different unit amplitudes and different interruption period durations set for electrochemical apparatuses of a same system under different temperatures, a more targeted intermittent charge operation can be performed on the electrochemical apparatuses in different temperature environments, so that a more accurate SOC₁ can be obtained for different systems.

The SOC threshold can refer to an SOC corresponding to lithium precipitation of the electrochemical apparatus, and is usually related to the system of the electrochemical apparatus. The SOC threshold in some embodiments of this application may be set depending on actual needs. The SOC threshold may vary with characteristics of electrochemical apparatuses of different systems. For example, when the electrochemical apparatus is a lithium iron phosphate system electrochemical apparatus, the SOC threshold ranges from 30% to 70%, such as 30%, 40%, 50%, 60%, or 70%; when the electrochemical apparatus is a lithium nickel manganese cobalt system electrochemical apparatus, the SOC threshold ranges from 20% to 50%, such as 20%, 30%, 40%, or 50%; and when the electrochemical apparatus is a lithium cobalt oxide system electrochemical apparatus, the SOC threshold ranges from 20% to 50%, such as 20%, 30%, 40%, or 50%.

With different SOC thresholds set for electrochemical apparatuses of different systems, the management strategies of electrochemical apparatuses of different systems can be optimized in a more targeted manner, and the safe service life of electrochemical apparatuses of different systems can be prolonged.

In an implementation, the steps of generating the first curve includes the following steps.

Step a: Obtain a first voltage, first current, and first SOC of the electrochemical apparatus at the second moment, and a second voltage and second current of the electrochemical apparatus at the third moment.

The second moment is a moment when the charge is stopped. The voltage, current, and SOC, namely, the first voltage, first current, and first SOC, of the electrochemical apparatus at the second moment may be obtained, which are denoted as V1, I1, and S1, respectively. Similarly, a voltage and current, namely, the second voltage and second current, of the electrochemical apparatus at the third moment may be obtained, which are denoted as V2 and I2, respectively.

Step b: Calculate a voltage change value and current change value of the electrochemical apparatus during the interruption period.

The duration of the interruption period is the time interval between the third moment and the second moment. The voltage change value of the electrochemical apparatus during the interruption period is ΔV, with ΔV=V2 - V1. The current change value of the electrochemical apparatus during the interruption period is ΔI, with ΔI=I2 - I1.

Step c: Calculate a first internal resistance of the electrochemical apparatus during the interruption period based on the voltage change value and current change value, and use the first internal resistance and the first SOC as one of data pairs of the first curve, where the data pair is a correspondence between internal resistance and SOC.

The first internal resistance of the electrochemical apparatus during the interruption period is R1, and R1=ΔV/ΔI. R1 and S1 are used as one of the data pairs of the first curve.

Multiple data pairs can be obtained by using the same method as described above.

Step d: Generate the first curve based on the multiple data pairs obtained through calculation.

SOCs of the electrochemical apparatus are used as horizontal coordinates, and internal resistances of the electrochemical apparatus are used as vertical coordinates. Points represented by these data pairs are filled in the coordinate system, and fitting is performed to obtain the first curve. In some embodiments of this application, after the first curve is obtained, the SOC₁ can be determined through the first curve. Thus, the step of charging the electrochemical apparatus at an original charge current or reduced current can be executed based on the magnitude relationship between the lithium precipitation SOC and the SOC threshold. This helps to reduce the risk of lithium precipitation of the electrochemical apparatus and prolong the service life of the electrochemical apparatus.

Some embodiments of this application provide an electrochemical apparatus management method. Lithium precipitation detection analysis can be performed on the electrochemical apparatus when the SOH₁ of the electrochemical apparatus is obtained at the first moment after the first charge-discharge cycle and when the SOH₁ satisfies the preset condition, thereby reducing the frequency of lithium precipitation detection. In addition, the SOC₁ is determined based on the data related to the electrochemical apparatus obtained during the intermittent charge operation. In response to the SOC₁ being lower than or equal to the SOC threshold, the electrochemical apparatus is charged with a smaller charge current, namely, a target charge current, so that the risk control operations can be performed to reduce the risk of lithium precipitation and improve the safety of the electrochemical apparatus.

An embodiment of this application further provides a system 900. As shown in FIG. 9, the electronic device 900 includes: a charge and discharge apparatus 901, a lithium precipitation SOC analysis apparatus 902, and a protection apparatus 903.

The charge and discharge apparatus 901 is configured to perform a first charge-discharge cycle on an electrochemical apparatus at a charge current.

The lithium precipitation SOC analysis apparatus 902 is configured to: at a first moment after the first charge-discharge cycle, obtain an SOH of the electrochemical apparatus to serve as an SOH₁; and in response to the SOH₁ satisfying a preset condition, perform an intermittent charge operation on the electrochemical apparatus at a first detection current, obtain data related to the electrochemical apparatus in the intermittent charge operation, and determine a current lithium precipitation SOC of the electrochemical apparatus based on the data related to the electrochemical apparatus to serve as an SOC₁.

In response to the SOC₁ being higher than a first SOC threshold, the protection apparatus 903 performs a second charge-discharge cycle on the electrochemical apparatus at the charge current. In response to the SOC₁ being lower than or equal to the first SOC threshold and higher than or equal to a second SOC threshold, the protection apparatus 903 controls the electrochemical apparatus to perform a risk control operation. In response to the second SOC threshold being lower than the first SOC threshold, or in response to the SOC₁ being lower than the second SOC threshold, the protection apparatus 903 controls the electrochemical apparatus to stop operating. It can be understood that some or all of functions of the protection apparatus 903 may be integrated into the charge and discharge apparatus 901. For example, in response to the SOC₁ being higher than the first SOC threshold, the lithium precipitation SOC analysis apparatus 902 may send a signal to the charge and discharge apparatus 901. The charge and discharge apparatus 901 may perform the second charge-discharge cycle on the electrochemical apparatus at the charge current.

In an implementation, the system further includes a threshold determining apparatus.

The threshold determining apparatus is configured to obtain a mapping table of SOH and SOC, where the mapping table includes multiple SOHs and multiple SOCs, and determine an SOH that is closest to the SOH₁ in the mapping table as a parameter SOH₁'; and
determine an SOC corresponding to the SOH₁' in the mapping table as an SOC₁'; determine, as an SOC₂', an SOC that is lower than the SOC₁' and whose difference to the SOC₁' is a first difference; and determine an SOH corresponding to the SOC₂' in the mapping table as the second threshold.

In an implementation, the protection apparatus 903 is further configured to: in response to the SOC₂ being higher than the SOC₂', perform a third charge-discharge cycle on the electrochemical apparatus at the charge current; in response to the SOC₂ being lower than or equal to the SOC₂' and higher than or equal to the second SOC threshold, control the electrochemical apparatus to perform a risk control operation; or in response to the SOC₂ being lower than the second SOC threshold, control the electrochemical apparatus to stop operating.

In an implementation, the lithium precipitation SOC analysis apparatus 902 is further configured to: at a third moment after the third charge-discharge cycle or the execution of the risk control operation, obtain a current SOH of the electrochemical apparatus to serve as an SOH₃; and in response to the SOH₃ being not higher than a third threshold, perform an intermittent charge operation on the electrochemical apparatus at the detection current, where the third threshold is lower than the second threshold.

In an implementation, the threshold determining apparatus is further configured to determine, as an SOC₃', an SOC that is lower than the SOC₂' and whose difference to the SOC₂' is a second difference, where the second difference is lower than the first difference; and determine an SOH corresponding to the SOC₃' in the mapping table as the third threshold.

In an implementation, the protection apparatus 903 is further configured to perform at least one of: reducing a charge voltage of the electrochemical apparatus, reducing a charge current of the electrochemical apparatus, performing staged charge on the electrochemical apparatus, or generating risk prompt information.

In an implementation, the electrochemical apparatus is a nickel-cobalt-manganese system electrochemical apparatus, and the second SOC threshold is higher than or equal to 10% and lower than or equal to 30%; the electrochemical apparatus is a lithium manganate system electrochemical apparatus, and the second SOC threshold is higher than or equal to 20% and lower than or equal to 40%; or the electrochemical apparatus is a lithium iron phosphate system electrochemical apparatus, and the second SOC threshold is higher than or equal to 10% and lower than or equal to 40%.

In an implementation, the data related to the electrochemical apparatus includes an SOC of the electrochemical apparatus and an internal resistance of the electrochemical apparatus, and the intermittent charge operation includes multiple charge periods and multiple interruption periods.

The lithium precipitation SOC analysis apparatus 902 is specifically configured to: in the intermittent charge operation, for each of the multiple interruption periods, obtain an SOC of the electrochemical apparatus and an internal resistance of the electrochemical apparatus that are corresponding to the interruption period, and obtain a first curve based on the obtained multiple SOCs of the electrochemical apparatus and the multiple internal resistances of the electrochemical apparatus corresponding to the multiple SOCs, where the first curve is a corresponding mapping curve between the SOCs and internal resistances of the electrochemical apparatus; and determine the SOC₁ based on the first curve.

In an implementation, the lithium precipitation SOC analysis apparatus 902 is specifically configured to: perform a first-order differential on the first curve to obtain a second curve, and determine, as the SOC₁, an SOC corresponding to a point at which the second curve first has a negative slope; or perform a first-order differential on the first curve to obtain a second curve, perform a second-order differential on the second curve to obtain a third curve, and determine, as the SOC₁, an SOC corresponding to a point at which the third curve first has a vertical coordinate less than zero.

In an implementation, the intermittent charge operation includes multiple charge periods, each charge cycle includes a charge period and an interruption period, and in each charge cycle, SOC of the electrochemical apparatus increases by a unit amplitude.

In an implementation, the electrochemical apparatus includes at least one of lithium iron phosphate system electrochemical apparatus, lithium nickel manganese cobalt system electrochemical apparatus, or lithium cobalt oxide system electrochemical apparatus, where in a case that the electrochemical apparatus is a lithium iron phosphate system electrochemical apparatus, the unit amplitude ranges from 0.5% to 10%, and a duration of the interruption period ranges from 1 second to 15 seconds; in a case that the electrochemical apparatus is a lithium nickel manganese cobalt system electrochemical apparatus, the unit amplitude ranges from 0.5% to 10%, and a duration of the interruption period ranges from 1 second to 30 seconds; or in a case that the electrochemical apparatus is a lithium cobalt oxide system electrochemical apparatus, the unit amplitude ranges from 0.5% to 10%, and a duration of the interruption period ranges from 1 second to 30 seconds.

In an implementation, the lithium precipitation SOC analysis apparatus 902 is specifically configured to satisfy any one of conditions (a) to (f):
(a) in a case that the electrochemical apparatus is a lithium iron phosphate system electrochemical apparatus and the electrochemical apparatus is at an ambient temperature of -10°C to 10°C, the unit amplitude ranges from 0.5% to 10%, and a duration of the interruption period ranges from 5 seconds to 15 seconds;
(b) in a case that the electrochemical apparatus is a lithium iron phosphate system electrochemical apparatus and the electrochemical apparatus is at an ambient temperature of 10°C to 45°C, the unit amplitude ranges from 0.5% to 10%, and a duration of the interruption period ranges from 1 second to 10 seconds;
(c) in a case that the electrochemical apparatus is a lithium nickel manganese cobalt system electrochemical apparatus and the electrochemical apparatus is at an ambient temperature of -10°C to 10°C, the unit amplitude ranges from 0.5% to 10%, and a duration of the interruption period ranges from 10 seconds to 30 seconds;
(d) in a case that the electrochemical apparatus is a lithium nickel manganese cobalt system electrochemical apparatus and the electrochemical apparatus is at an ambient temperature of 10°C to 45°C, the unit amplitude ranges from 0.5% to 10%, and a duration of the interruption period ranges from 1 second to 10 seconds;
(e) in a case that the electrochemical apparatus is a lithium cobalt oxide system electrochemical apparatus and the electrochemical apparatus is at an ambient temperature of -10°C to 10°C, the unit amplitude ranges from 0.5% to 10%, and a duration of the interruption period ranges from 15 seconds to 30 seconds; or
(f) in a case that the electrochemical apparatus is a lithium cobalt oxide system electrochemical apparatus and the electrochemical apparatus is at an ambient temperature of 10°C to 45°C, the unit amplitude ranges from 0.5% to 10%, and a duration of the interruption period ranges from 1 second to 10 seconds.

Some embodiments of this application provide a system. Lithium precipitation detection analysis can be performed on the electrochemical apparatus when the SOH₁ of the electrochemical apparatus is obtained at the first moment after the first charge-discharge cycle and when the SOH₁ satisfies the preset condition, thereby reducing the frequency of lithium precipitation detection. Furthermore, the intermittent charge operation is performed on the electrochemical apparatus, the data related to the electrochemical apparatus is obtained in the intermittent charge operation, the lithium precipitation SOC of the electrochemical apparatus is determined based on the related data to serve as an SOC₁, and then based on the relationship between the SOC₁ and the first SOC threshold and second SOC threshold, the electrochemical apparatus is controlled to stop operating or the electrochemical apparatus is controlled to perform a risk control operation. This reduces the safety hazards caused when the electrochemical apparatus is still used after lithium precipitation, thereby improving the safety of the electrochemical apparatus during use.

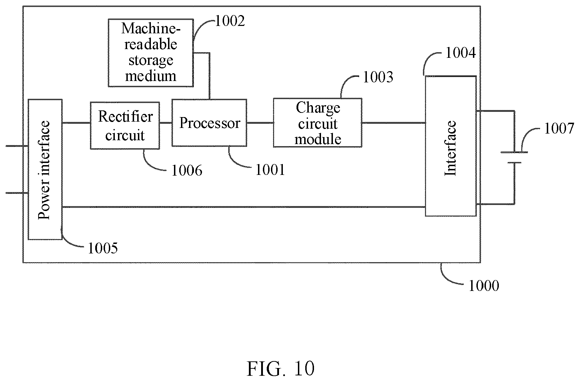

An embodiment of this application further provides a system. As shown in FIG. 10, the system 1000 includes a processor 1001 and a machine-readable storage medium 1002. The system 1000 may further include a charge circuit module 1003, an interface 1004, a power interface 1005, and a rectifier circuit 1006. The charge circuit module 1003 is configured to receive an instruction issued by the processor 1001 to perform an intermittent charge operation on a lithium-ion battery 1007. The charge circuit module 1003 may be further configured to receive an instruction issued by the processor 1001 to reduce a voltage/current of the lithium-ion battery 1007, or disconnect the electrical connection to the lithium-ion battery 1007 so that the lithium-ion battery 1007 stops operating. The charge circuit module 1003 may further obtain an SOH parameter, a total operation duration, and other parameters of the lithium-ion battery 1007, and send these parameters to the processor 1001. The interface 1004 is configured to electrically connect to the lithium-ion battery 1007. The power interface 1005 is configured to connect to an external power supply. The rectifier circuit 1006 is configured to rectify an input current. The machine-readable storage medium 1002 stores a machine-executable instruction that can be executed by the processor, and when the processor 1001 executes the machine-executable instruction, the steps of the method described in any one of the foregoing implementations are implemented.

An embodiment of this application further provides an electrochemical apparatus including the system 1000 described in the foregoing implementations.

An embodiment of this application further provides an electronic device including the electrochemical apparatus described in the foregoing implementations.

The machine-readable storage medium may include a random access memory (Random Access Memory, RAM for short), or may include a non-volatile memory (non-volatile memory), such as at least one disk storage. Optionally, the memory may alternatively be at least one storage apparatus located away from the processor.

The processor may be a general-purpose processor including a central processing unit (Central Processing Unit, CPU for short), a network processor (Network Processor, NP for short), or the like; or may be a digital signal processor (Digital Signal Processing, DSP for short), an application specific integrated circuit (Application Specific Integrated Circuit, ASIC for short), a field-programmable gate array (Field-Programmable Gate Array, FPGA for short) or another programmable logic device, a discrete gate or transistor logic device, or a discrete hardware assembly.

The system/electrochemical apparatus/electronic device embodiment is essentially similar to the method embodiment, and therefore is described briefly. For related information, refer to the descriptions of the related parts in the method embodiment.

The foregoing descriptions are merely preferred embodiments of this application, but are not intended to limit this application. Any modification, equivalent replacement, or improvement made without departing from the spirit and principle of this application shall fall within the protection scope of this application.

It should be noted that relational terms such as "first" and "second" are only used to distinguish one entity or operation from another entity or operation, and do not necessarily require or imply that there is any such actual relationship or order between these entities or operations. Terms "include", "comprise", or any other variations thereof are intended to cover non-exclusive inclusions, such that a process, method, article or device including a series of elements not only includes these elements, but also includes other elements which are not expressly listed, or further includes elements which are inherent to such process, method, article or device. In absence of more constraints, an element preceded by "includes a..." does not preclude existence of other identical elements in the process, method, article, or device that includes the element.

The embodiments in this specification are described in a related manner. For a part that is the same or similar between different embodiments, reference may be made between the embodiments. Each embodiment focuses on differences from other embodiments. In particular, the system embodiment is essentially similar to the method embodiment, and therefore is described briefly. For related information, refer to descriptions of the related parts in the method embodiment.

The foregoing descriptions are merely preferred embodiments of this application, but are not intended to limit this application. Any modification, equivalent replacement, or improvement made without departing from the spirit and principle of this application shall fall within the protection scope of this application.

## Claims

1. An electrochemical apparatus management method, wherein the method comprises:
S1: performing a first charge-discharge cycle on an electrochemical apparatus at a charge current;
S2: at a first moment after the first charge-discharge cycle, obtaining an SOH of the electrochemical apparatus to serve as an SOH₁;
S3: in response to the SOH₁ satisfying a preset condition, performing an intermittent charge operation on the electrochemical apparatus at a first detection current, obtaining data related to the electrochemical apparatus in the intermittent charge operation, and determining a current lithium precipitation SOC of the electrochemical apparatus based on the data related to the electrochemical apparatus to serve as an SOC₁ and one step of S4-1 to S4-3:
S4-1: in response to the SOC₁ being higher than a first SOC threshold, performing a second charge-discharge cycle on the electrochemical apparatus at the charge current;
S4-2: in response to the SOC₁ being lower than or equal to the first SOC threshold and higher than or equal to a second SOC threshold, controlling the electrochemical apparatus to perform a risk control operation, wherein the second SOC threshold is lower than the first SOC threshold; or
S4-3: in response to the SOC₁ being lower than the second SOC threshold, controlling the electrochemical apparatus to stop operating.

2. The electrochemical apparatus management method according to claim 1, wherein the in response to the SOH₁ satisfying a preset condition comprises:
in response to the SOH₁ being not higher than a first threshold.

3. The electrochemical apparatus management method according to claim 2, wherein the method further comprises:
S5: at a second moment after step S4-1 or step S4-2 is executed, obtaining a current SOH of the electrochemical apparatus to serve as an SOH₂; and
S6: in response to the SOH₂ being not higher than a second threshold, performing an intermittent charge operation on the electrochemical apparatus at a second detection current, obtaining data related to the electrochemical apparatus in the intermittent charge operation, and determining a current lithium precipitation SOC of the electrochemical apparatus based on the data related to the electrochemical apparatus to serve as an SOC₂, wherein the second threshold is lower than the first threshold.

4. The electrochemical apparatus management method according to claim 3, wherein the second threshold is determined in the following steps, comprising:
obtaining a mapping table of SOH and SOC, wherein the mapping table comprises multiple SOHs and multiple SOCs;
determining an SOH in the mapping table that is closest to the SOH₁ as a parameter SOH₁';
determining an SOC corresponding to the SOH₁' in the mapping table as an SOC₁';
determining, as an SOC₂', an SOC that is lower than the SOC₁' and whose difference to the SOC₁' is a first difference; and
determining an SOH corresponding to the SOC₂' in the mapping table as the second threshold.

5. The electrochemical apparatus management method according to claim 4, wherein the method further comprises:
S7-1: in response to the SOC₂ being higher than the SOC₂', performing a third charge-discharge cycle on the electrochemical apparatus at the charge current; or
S7-2: in response to the SOC₂ being lower than or equal to the SOC₂' and higher than or equal to the second SOC threshold, controlling the electrochemical apparatus to perform a risk control operation; or
S7-3: in response to the SOC₂ being lower than the second SOC threshold, controlling the electrochemical apparatus to stop operating.

6. The electrochemical apparatus management method according to claim 5, wherein the method further comprises:
at a third moment after step S7-1 or step S7-2 is executed, obtaining a current SOH of the electrochemical apparatus to serve as an SOH₃; and
in response to the SOH₃ being not higher than a third threshold, performing an intermittent charge operation on the electrochemical apparatus at the detection current, wherein the third threshold is lower than the second threshold.

7. The electrochemical apparatus management method according to claim 6, wherein the third threshold is determined in the following steps, comprising:
determining, as an SOC₃', an SOC that is lower than the SOC₂' and whose difference to the SOC₂' is a second difference, wherein the second difference is lower than the first difference; and
determining an SOH corresponding to the SOC₃' in the mapping table as the third threshold.

8. The electrochemical apparatus management method according to claim 1, wherein the risk control operation comprises at least one of: reducing a charge voltage of the electrochemical apparatus, reducing a charge current of the electrochemical apparatus, performing staged charge on the electrochemical apparatus, or generating risk prompt information.

9. The electrochemical apparatus management method according to claim 1, wherein the electrochemical apparatus is a nickel-cobalt-manganese system electrochemical apparatus, and the second SOC threshold is higher than or equal to 10% and lower than or equal to 30%;
the electrochemical apparatus is a lithium manganate system electrochemical apparatus, and the second SOC threshold is higher than or equal to 20% and lower than or equal to 40%; or
the electrochemical apparatus is a lithium iron phosphate system electrochemical apparatus, and the second SOC threshold is higher than or equal to 10% and lower than or equal to 40%.

10. The electrochemical apparatus management method according to claim 1, wherein the data related to the electrochemical apparatus comprises an SOC of the electrochemical apparatus and an internal resistance of the electrochemical apparatus, the intermittent charge operation comprises multiple charge periods and multiple interruption periods, and the step of obtaining data related to the electrochemical apparatus in the intermittent charge operation, and determining the SOC₁ based on the data related to the electrochemical apparatus comprises:
in the intermittent charge operation, for each of the multiple interruption periods, obtaining an SOC of the electrochemical apparatus and an internal resistance of the electrochemical apparatus that are corresponding to the interruption period, and obtaining a first curve based on the obtained multiple SOCs of the electrochemical apparatus and the multiple internal resistances of the electrochemical apparatus corresponding to the multiple SOCs, wherein the first curve is a corresponding mapping curve between the SOCs and internal resistances of the electrochemical apparatus; and
determining the SOC₁ based on the first curve.

11. The electrochemical apparatus management method according to claim 10, wherein the step of determining the SOC₁ based on the first curve comprises at least one of method 1 or method 2, wherein:
method 1 comprises:
performing a first-order differential on the first curve to obtain a second curve, and
determining, as the SOC₁, an SOC corresponding to a point at which the second curve first has a negative slope; and
method 2 comprises:
performing a first-order differential on the first curve to obtain a second curve,
performing a second-order differential on the second curve to obtain a third curve, and
determining, as the SOC₁, an SOC corresponding to a point at which the third curve first has a vertical coordinate less than zero.

12. The electrochemical apparatus management method according to claim 1, wherein the intermittent charge operation comprises multiple charge periods, each charge cycle comprises a charge period and an interruption period, and in each charge cycle, SOC of the electrochemical apparatus increases by a unit amplitude.

13. The electrochemical apparatus management method according to claim 12, wherein the electrochemical apparatus comprises at least one of lithium iron phosphate system electrochemical apparatus, lithium nickel manganese cobalt system electrochemical apparatus, or lithium cobalt oxide system electrochemical apparatus, wherein
in a case that the electrochemical apparatus is a lithium iron phosphate system electrochemical apparatus, the unit amplitude ranges from 0.5% to 10%, and a duration of the interruption period ranges from 1 second to 15 seconds;
in a case that the electrochemical apparatus is a lithium nickel manganese cobalt system electrochemical apparatus, the unit amplitude ranges from 0.5% to 10%, and a duration of the interruption period ranges from 1 second to 30 seconds; or
in a case that the electrochemical apparatus is a lithium cobalt oxide system electrochemical apparatus, the unit amplitude ranges from 0.5% to 10%, and a duration of the interruption period ranges from 1 second to 30 seconds.

14. The electrochemical apparatus management method according to claim 13, wherein the method satisfies any one of conditions (a) to (f):
(a) in a case that the electrochemical apparatus is a lithium iron phosphate system electrochemical apparatus and the electrochemical apparatus is at an ambient temperature of -10°C to 10°C, the unit amplitude ranges from 0.5% to 10%, and a duration of the interruption period ranges from 5 seconds to 15 seconds;
(b) in a case that the electrochemical apparatus is a lithium iron phosphate system electrochemical apparatus and the electrochemical apparatus is at an ambient temperature of 10°C to 45°C, the unit amplitude ranges from 0.5% to 10%, and a duration of the interruption period ranges from 1 second to 10 seconds;
(c) in a case that the electrochemical apparatus is a lithium nickel manganese cobalt system electrochemical apparatus and the electrochemical apparatus is at an ambient temperature of -10°C to 10°C, the unit amplitude ranges from 0.5% to 10%, and a duration of the interruption period ranges from 10 seconds to 30 seconds;
(d) in a case that the electrochemical apparatus is a lithium nickel manganese cobalt system electrochemical apparatus and the electrochemical apparatus is at an ambient temperature of 10°C to 45°C, the unit amplitude ranges from 0.5% to 10%, and a duration of the interruption period ranges from 1 second to 10 seconds;
(e) in a case that the electrochemical apparatus is a lithium cobalt oxide system electrochemical apparatus and the electrochemical apparatus is at an ambient temperature of -10°C to 10°C, the unit amplitude ranges from 0.5% to 10%, and a duration of the interruption period ranges from 15 seconds to 30 seconds; or
(f) in a case that the electrochemical apparatus is a lithium cobalt oxide system electrochemical apparatus and the electrochemical apparatus is at an ambient temperature of 10°C to 45°C, the unit amplitude ranges from 0.5% to 10%, and a duration of the interruption period ranges from 1 second to 10 seconds.

15. A system, comprising a processor and a machine-readable storage medium, wherein the machine-readable storage medium stores a machine-executable instruction capable of being executed by the processor, and when the processor executes the machine-executable instruction, the method according to any one of claims 1 to 14 is implemented.

16. An electrochemical apparatus, wherein the electrochemical apparatus comprises the system according to claim 15.

17. An electronic device, wherein the electronic device comprises the electrochemical apparatus according to claim 16.

18. A computer-readable storage medium, wherein the computer-readable storage medium stores a computer program, and when the computer program is run by a processor, the method according to any one of claims 1 to 14 is executed.
